# EUROPÄISCHE PATENTANMELDUNG

(11) **EP 1 393 974 A1**
(43) Veröffentlichungstag der Anmeldung: **03.03.2004**
(21) Anmeldenummer: 02019384.3
(22) Anmeldetag: 29.08.2002
(51) Int. Cl.: B60R 1/06

(54) **Aussenrückspiegelaufbau für Nutzfahrzeuge**

(71) Anmelder: MEKRA Lang GmbH & Co. KG, 90765 Fürth (DE)
(72) Erfinder: Lang, Heinrich, 91465 Ergersheim (DE); Popp, Albrecht, 91629 Weihenzell (DE)
(74) Vertreter: Winter, Brandl, Fürniss, Hübner, Röss, Kaiser, Polte Partnerschaft

(57) **Zusammenfassung**

Ein modularer Außenrückspieglaufbau für ein Nutzfahrzeug umfaßt einen oberen Lagerbock 1, der ein oberes Drehgelenk 1a aufweist, einen unteren Lagerbock 2, der ein unteres Drehgelenk 2a aufweist, einen ersten Spiegel 3 und einen Haltearm 5, an dem der erster Spiegel 3 befestigt ist und der im oberen und unteren Drehgelenk 1a, 2a des oberen bzw. unteren Lagerbocks 1, 2 so gelagert ist, daß er bezüglich der Lagerböcke um eine Achse drehbar ist. Aufgrund des modularen Aufbaus können mit wenigen Bauteilen eine Vielzahl verschiedener Spiegelvarianten zur Verfügunmg gestellt werden.

Gleichermaßen wird ein einklappbarer Außenspiegelaufbau für ein Nutzfahrzeug zur Verfügung gestellt mit einem ersten Lagerbock 1, der ein erstes Drehgelenk 1a aufweist, einem ersten Spiegel 3, einen Haltearm 5, der in dem ersten Drehgelenk gelagert ist und an dem der erste Spiegel 3 befestigt ist; und einer Stellvorrichtung 6, die einen Stellmotor 7 umfaßt und so mit dem Haltearm 5 verbunden ist, daß mittels des Motors 7 der Haltearm 5 bezüglich seiner durch das erstes Drehgelenk 1a definierten Drehachse zur Fahrzeugseite hin- bzw. von dieser weggeschwenkt werden kann.

## Beschreibung

Die vorliegende Erfindung betrifft einen Außenrückspiegelaufbau für Nutzfahrzeuge.

Nutzfahrzeuge wie Lastkraftwagen, Reisebusse und dergleichen weisen in der Regel sowohl auf ihrer Fahrer- als auch auf ihrer Beifahrerseite außen jeweils wenigstens einen Hauptspiegel und oft zusätzlich einen Weitwinkelspiegel auf. Da das Nutzfahrzeug zusätzlich je nach Bestimmungsland rechts- oder linksgesteuert ist, ergeben sich so vier verschiedene Spiegel (Fahrer-/Beifahrerseite rechts-/linksgesteuert), die der Spiegelhersteller zur Verfügung stellen muß, was sowohl hohe Herstellungskosten für die verschiedene Formen und die Umrüstung dieser Formen als auch hohe Lagerkosten verursacht.

Zusätzlich sollen oftmals verschiedene Ausführungsvarianten desselben Spiegels (beispielsweise des fahrerseitigen Spiegels für ein linksgesteuertes Fahrzeug) angeboten werden, etwa eine teure, aber aerodynamisch günstige Bauform und gleichzeitig eine kostengünstigere Version. Hierzu müssen bislang jeweils zusätzliche Varianten an Befestigungseinrichtungen, Spiegelscheiben, Verstelleinrichtungen etc. entworfen, hergestellt und auf Lager gehalten werden, was wiederum einen erheblichen Kostenfaktor darstellt. Zusätzlich müssen auch an den Nutzfahrzeugen evtl. verschiedene Befestigungsmöglichkeiten (Bohrungen etc.) vorgesehen sein.

Weiters stehen Außenspiegel für Nutzfahrzeuge normalerweise aufgrund der gewünschten Sichtwinkel seitlich und/oder nach vorne vom Nutzfahrzeug hervor. Dies ist jedoch manchmal nachteilig, so beispielsweise beim Durchfahren von Waschstraßen, beim Transport der Nutzfahrzeuge (etwa auf Fähren oder Transportschiffen, wo die Nutzfahrzeuge möglichst eng neben- und hintereinander plaziert werden sollen) oder beim Rangieren in engen Bereichen (Hofeinfahrten, Straßenunterführungen etc.). Daher sollen solche Außenspiegel auch einklappbar, d.h. an die Fahrzeugseite hinschwenkbar, sein. Nachteilig muß dies heute manuell erfolgen, was insbesondere zum Einklappen des beifahrerseitigen, vom Fahrer nicht direkt erreichbaren Spiegels aufwendig ist.

Aufgabe der vorliegenden Erfindung ist es daher, die oben beschriebenen Nachteile zu vermeiden.

Diese Aufgabe wird durch die Merkmale des Anspruchs 1 bzw. 5 gelöst.

Erfindungsgemäß ist ein Außenrückspieglaufbau für ein Nutzfahrzeug modular aufgebaut und umfaßt einen oberen und einen unteren Lagerbock, der ein oberes bzw. ein unteres Drehgelenk aufweist. Die Lagerböcke können vorteilhafterweise an einer Tür des Nutzfahrzeuges befestigt sein.

Zusätzlich umfaßt der Außenrückspiegelaufbau wenigstens einen ersten Spiegel, beispielsweise einen Hauptspiegel. Weiters kann der Spiegelaufbau einen zweiten Spiegel, beispielsweise einen Weitwinkelspiegel umfassen. Jeder Spiegel kann eine Spiegelscheibe und eine Verstellvorrichtung für diese Spiegelscheibe umfassen.

Weiters umfaßt ein erfindungsgemäßer Spiegelaufbau einen Haltearm, an dem erster und zweiter Spiegel mittels ihrer Verstellvorrichtungen befestigt sind. Der Haltearm ist im oberen und unteren Drehgelenk des oberen bzw. unteren Lagerbocks so gelagert, daß er bezüglich der Lagerböcke um eine Achse drehbar ist.

Unterschiedliche Ausführungen des Haltearms können nun in einem erfindungsgemäßen Außenspiegelaufbau verwendet werden. Beispielsweise kann der Haltearm als integrales Formteil ausgeführt sein, in dem die Verstellvorrichtungen befestigt sind. Gleichermaßen kann der Haltearm im wesentlichen aus einem Rohrbügel bestehen, an dem Verstellvorrichtungen befestigt sind. Erster und zweiter Spiegel können dabei separat mit jeweils eigener Verkleidung oder zusammen in einem gemeinsamen Gehäuse an einem solchen Rohrbügel befestigt sein.

Durch den modularen Aufbau, also dadurch, daß der Außenspiegelaufbau jeweils den gleichen oberen und unteren Lagerbock sowie den gleichen ersten und zweiten Spiegel aufweist und sich nur in der Ausführung des Haltearms unterscheidet, ist es möglich, mit einer relativen geringen Anzahl von Elementen eine große Variantenvielfalt an verschiedenen Außenspiegeln zur Verfügung zu stellen. Darüberhinaus kann beispielsweise ein Haltearm in Form eines Rohrbügels sowohl für fahrer- als auch für beifahrerseitige Spiegelaufbauten verwendet werden. Auch können ebenfalls erster und zweiter Spiegel in einem gemeinsamen oder separaten Gehäusen sowohl fahrer- als auch für beifahrerseitig verwendet werden. Auf diese Weise können mit wenigen verschiedenen Bauteilen baukastenartig verschiedenste Außenspiegel (fahrer-/beifahrerseitig; links-/rechtsgesteuert; aerodynamisch/kostenmäßig optimiert etc.) kostengünstig zur Verfügung gestellt werden.

Zum Einklappen eines Außenspiegels für ein Nutzfahrzeug mit wenigstens einem ersten (oberen) Lagerbock, der ein erstes (oberes) Drehgelenk aufweist, wenigstens einem ersten Spiegel, der eine Spiegelscheibe und eine Verstellvorrichtung für diese Spiegelscheibe umfassen kann, und einen Haltearm, an dem der erste Spiegel, etwa mittels seiner Verstellvorrichtung, befestigt ist, ist gemäß Anspruch 5 eine Stellvorrichtung vorhanden, die einen Stellmotor umfaßt und so mit dem Haltearm verbunden ist, daß mittels des Motors der Haltearm bezüglich seiner durch das erste Drehgelenk definierten Drehachse zur Fahrzeugseite hin- bzw. von dieser weggeschwenkt werden kann.

Vorteilhafterweise umfaßt ein erfindungemäßer Außenspiegelaufbau auch einen zweiten (unteren) Lagerbock mit einem zweiten (unteren) Drehgelenk, in dem der Halter zusätzlich gelagert ist, wobei die Stellvorrichtung den Haltearm um die durch erstes und zweites Drehgelenk definierte Drehachse schwenken kann.

In einer bevorzugten Ausführung umfaßt die Stellvorrichtung ein Lineargetriebe mit einem Schiebegestänge, daß gelenkig am Haltearm befestigt ist und durch den Stellmotor so verschoben werden kann, daß der Haltearm zur Fahrzeugseite hin- bzw. von dieser weggeschwenkt wird. In einer anderen bevorzugten Ausführungsform umfaßt die Stellvorrichtung ein Drehgetriebe, das am oberen oder unteren Drehgelenk wirkt und den Haltearm zur Fahrzeugseite hin- bzw. von dieser wegschwenkt.

Vorteilhafterweise ist dabei die Stellvorrichtung im Außenspiegelaufbau integriert, indem der Stellmotor im Haltearm oder in einem Lagerbock angeordnet ist.

In einer bevorzugten Ausführungsform weist die Stellvorrichtung einen vorderen und hinteren Endanschlag auf, der den Verschwenkvorgang des Haltearms in einer eingeklappten bzw. einer ausgeklappten Endposition begrenzt.

Weitere Vorteile, Merkmale und Ausführungen der vorliegenden Erfindung ergeben sich aus den Unteransprüchen und den nachfolgend beschriebenen Ausführunsgbeispielen. Hierzu zeigt:
Fig. 1: einen Außenspiegelaufbau für ein Nutzfahrzeug nach einer ersten Ausführung der vorliegenden Erfindung in einer Frontalansicht;
Fig. 2: einen Schnitt der Fig. 1 längs der Linie A-A;
Fig. 3: einen Außenspiegelaufbau für ein Nutzfahrzeug nach einer zweiten Ausführung der vorliegenden Erfindung in einer Frontalansicht;
Fig. 4: einen Schnitt der Fig. 3 längs der Linie A-A; und
Fig. 5: einen Außenspiegelaufbaue nach einer dritten Ausführung der vorliegenden Erfindung.

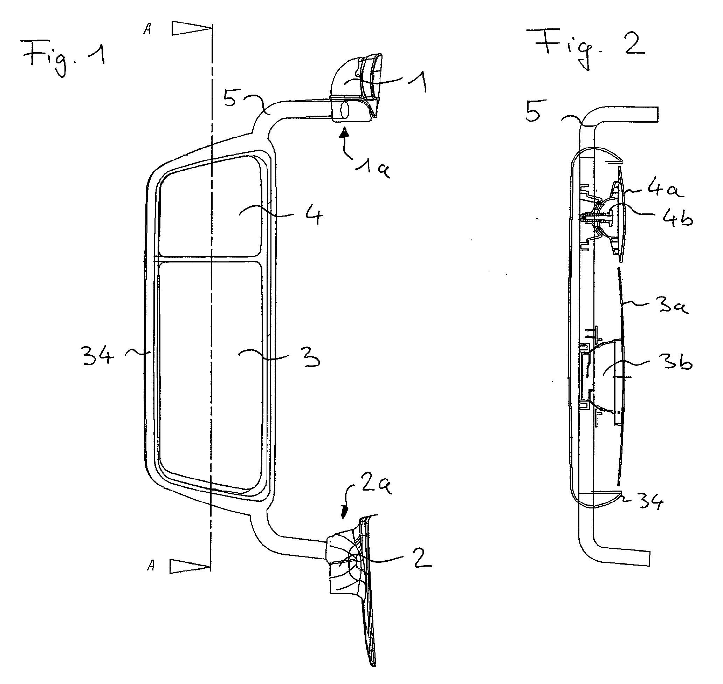

Fig. 1 zeigt einen Außenspiegelaufbau für ein Nutzfahrzeug nach einer ersten Ausführung der vorliegenden Erfindung. Der Außenspiegelaufbau umfaßt einen oberen Lagerbock 1 und einen unteren Lagerbock 2, die an einer Fahrzeugtür (nicht dargestellt) befestigt sind und jeweils ein hier nur angedeutetes Drehgelenk 1a bzw. 2a aufweisen. Weiters umfaßt der Spiegelaufbau einen ersten Spiegel (Hauptspiegel) 3 und einen zweiten Spiegel (Weitwinkelspiegel) 4, die jeweils eine Spiegelscheibe 3a bzw. 4a und eine Verstellvorrichtung 3b bzw. 4b umfassen, wie dies in Fig. 2 dargestellt ist. Die Verstellvorrichtung 3a bzw. 4a nach dem Stand der Technik kann dabei manuell und/oder elektrisch verstellbar sein. Erster und zweiter Spiegel 3, 4 sind in mit ihren Verstellvorrichtungen 3b, 4b in einem gemeinsamen Gehäuse 34 angeordnet.

Zuzsätzlich umfaßt der Spiegelaufbau einen Haltearm 5, an dem Haupt- und Weitwinkelspiegel 3 bzw. 4 mittels ihrer Verstellvorrichtung 3b bzw. 4b verstellbar befestigt sind. Der Haltearm 5 in Form eines Rohrbügels ist seinerseits am oberen und unteren Lagerbock 1 bzw. 2 so befestigt, daß er im oberen und unteren Drehgelenk 1a, 2a um eine im wesentlichen vertikale Achse drehbar ist und somit zur Fahrzeugseite hin- und von dieser weggeschwenkt werden kann.

Am Haltearm 5 ist das gemeinsame Gehäuse 34 für den ersten und zweiten Spiegel 3, 4 mit den Verstellvorrichtungen 3b, 4b befestigt.

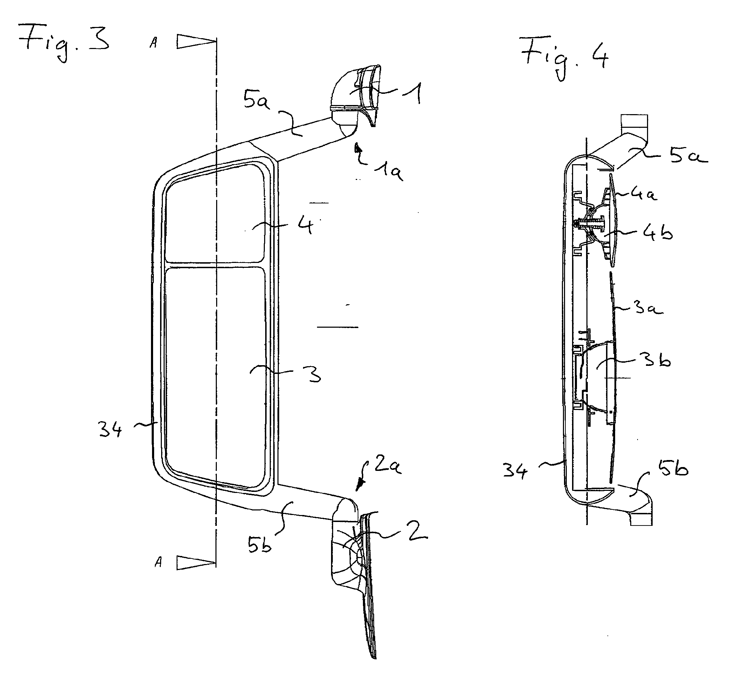

Fign. 3, 4 zeigen einen Außenspiegelaufbau für ein Nutzfahrzeug nach einer zweiten Ausführung der vorliegenden Erfindung. Diese Ausführung unterscheidet sich von der ersten Ausführung nur im Haltearm 5: dieser ist hier zweiteilig, i.e. mit einem oberen Teil 5a und einem unteren Teil 5b, ausgeführt, wobei oberes und unteres Teil jeweils mit dem gemeinsamen Gehäuse 34 an dessen oberem bzw. unteren Ende verbunden und im oberen bzw. unteren Drehgelenk 1a bzw. 2a drehbar gelagert sind.

Beiden Ausführungsformen gemeinsam ist der modulare Aufbau aus oberem und unteren Lagerbock 1, 2 sowie erstem und zweitem Spiegel 3, 4 einschließlich deren Verstellvorrichtungen 3b, 4b und dem gemeinsamen Gehäuse 34. Diese Elemente sind für die verschiedenen Ausführungen gleich, was die Herstellungs- und Lagerkosten deutlich reduziert. Durch die Verwendung verschiedener Haltearme wie die der ersten und zweiten Ausführungsform können so baukastenartig verschiedene Spiegelvarianten zur Verfügung gestellt und gegebenenfalls auch noch nachträglich ausgetauscht werden. Insbesondere ist das gemeinsame Gehäuse 34 bezüglich seiner Querachse symmetrisch ausgebildet. Somit kann dasselbe gemeinsame Gehäuse sowohl für einen linken als auch für einen rechten Außenspiegel verwendet werden, indem das Gehäuse 34 um 180° um eine zu seiner Längs- und Querachse normale Achse gedreht und am Rohrbügel 5 der ersten Ausführung bzw. dem oberen und unteren Teil 5a, 5b des Halters der zweiten Ausführung befestigt und erster und zweiter Spiegel 3, 4 entsprechend im Gehäuse 34 angeordnet werden.

Damit können oberer und unterer Lagerbock bereits frühzeitig am Nutzfahrzeug befestigt werden, unabhängig von der später gewünschten Form des Spiegels, so daß hier sowohl Montageplanung als auch die Befestigung am Fahrzeug bereits deutlich vereinfacht werden. Spiegel einschließlich der Spiegelscheiben und der Verstelleinrichtungen werden für alle Spiegelvarianten einheitlich hergestellt, was die Produktionskosten vorteilhaft senkt.

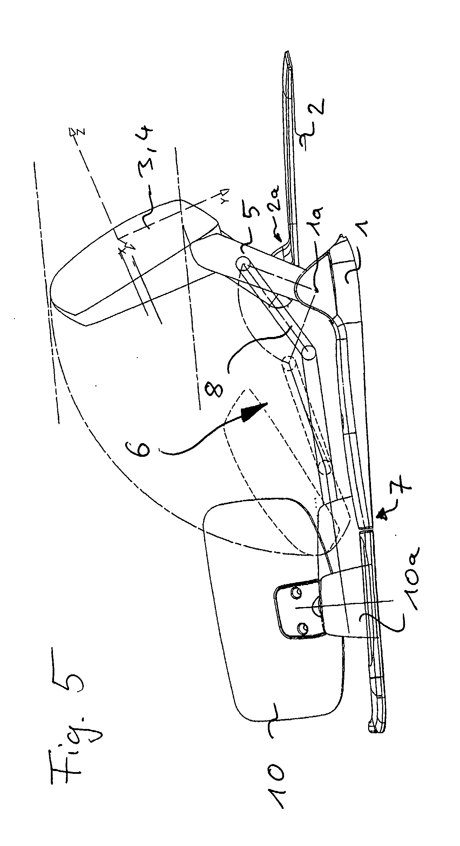

Fig. 5 zeigt einen Außenspiegelaufbau für ein Nutzfahrzeug nach einer dritten Ausführung der vorliegenden Erfindung in der Draufsicht mit ausgeklapptem (durchgezogen dargestellt) und eingeklapptem (strichliert dargestellt) Haltearm 5. Dieser ist am oberen Lagerbock 1 und am unteren Lagerbock 2 jeweils im Drehgelenk 1a bzw. 2a drehbar gelagert. Am Haltearm sind ein erster und zweiter Spiegel 3, 4 integral befestigt.

Zusätzlich umfaßt der Spiegelaufbau einen am oberen Lagerbock 1 angeordneten Rampenspiegel 10, der am oberen Lagerbock 1 mittels einer Verstellvorrichtung 10a befestigt ist. In dieser Verstellvorrichtung 10a ist ein Stellmotor 7 angeordnet. Dabei können Stellmotor 7 und Verstellvorrichtung 10a bzw. Rampenspiegel 10 auch intergral, i.e. als eine Einheit, ausgebildet sein. Dieser Stellmotor, der insbesondere ein elektrischer Drehmotormotor oder Linearmotor sein kann, bewegt über ein Lineargetriebe (nicht dargestellt) ein Schiebegestänge 8, das seinerseits gelenkig am Haltearm 5 befestigt ist. Stellmotor 7, Lineargetriebe und Schiebegestänge 8 bilden zusammen eine Stellvorrrichtung 6, wobei bei einem Drehmotor das Lineargetriebe dessen Drehbewegung in eine Linearbewegung umsetzt und bei einem Linearmotor das Lineargetriebe entfallen kann.

Wird das Schiebegestänge 8 mittels des Stellmotors 7 bewegt, so wird hierdurch der Haltearm 5 je nach Arbeitsrichtung des Stellmotors 7 zur Fahrzeugseite hin ein- bzw. von dieser weggeschwenkt. Dabei ist die Kinematik des Lineargetriebes und des Schiebegestänges so konfiguriert, daß der Haltearm bis zu einer ersten Endposition an die Fahrzeugseite herangeschwenkt und bis zu einer zweiten Endposition vom Fahrzeug weggeschwenkt werden kann.

Der Stellmotor wird beispielsweise über eine Bedieneinrichtung am Armaturenbrett des Nutzfahrzeugs (nicht dargestellt) so angesteuert, daß er den Haltearm 5 in die ausgeklappte oder eingeklappte Endposition schwenkt. Hierdurch ist es für den Fahrer vorteilhaft möglich, den Außenspiegel von seinem Platz aus ein- bzw. auszuklappen, was insbesondere zum Hin- und Wegklappen des Beifahrerspiegels, aber auch zum Hin- und Wegklappen des Fahrerspiegels bei geschlossenem Fenster und ohne manuellen Kraftaufwand dient.

In einer weiteren hier nicht daregstellten Ausführung ist der Stellmotor 7 nicht in der Verstellvorrichtung 10a eines Rampenspiegels 10, sondern direkt am Lagerbock 1 befestigt. Eine solche Ausführung ermöglicht vorteilhaft die nachträgliche Nachrüstung vorhandener schwenkbarer Außenspiegel mit einer erfindungsgemäßen Stellvorrichtung.

In einer weiteren hier nicht dargestellten Ausführungsform weist ein erfindungsgemäßer Außenspiegelaufbau nur einen ersten (oberen) Lagerbock 1 auf, in dessen erstem (oberen) Drehgelenk 1a der Halter 5 drehbar um wenigstens eine Achse gelagert ist.

## Patentansprüche

1. Modularer Außenrückspieglaufbau für ein Nutzfahrzeug, der umfaßt:
einen oberen Lagerbock (1), der ein oberes Drehgelenk (1a aufweist;
einen unteren Lagerbock (2), der ein unteres Drehgelenk (2a) aufweist;
einen ersten Spiegel (3); und
einen Haltearm (5), an dem der erster Spiegel (3) befestigt ist und der im oberen und unteren Drehgelenk (1a, 2a) des oberen bzw. unteren Lagerbocks (1, 2) so gelagert ist, daß er bezüglich der Lagerböcke um eine Achse drehbar ist.

2. Modularer Außenrückspieglaufbau nach Anspruch 1, **dadurch gekennzeichnet, daß** der erste Spiegel (3) eine Spiegelscheibe (3a) und eine Verstellvorrichtung (3b) für diese Spiegelscheibe umfaßt.

3. Modularer Außenrückspieglaufbau nach wenigstens einem der vorhergehenden Ansprüche, **dadurch gekennzeichnet, daß** er einen zweiten Spiegel (4) umfaßt, der am Halter (5) befestigt ist.

4. Modularer Außenrückspieglaufbau nach wenigstens einem der vorhergehenden Ansprüche, **dadurch gekennzeichnet, daß** der obere Lagerbock (1) und/oder der untere Lagerbock (2) und/oder der erste Spiegel (3) und/oder ein Gehäuse (34), in dem wenigstens der erste Spiegel (3) angeordnet ist, mit verschiedenen Haltearmen aus einer Mehrzahl unterschiedlicher Haltearme (5), die insbesondere einen mehrteilig oder als Rohrbügel ausgebildeten Haltearm umfaßt, montierbar ist.

5. Einklappbarer Außenspiegelaufbau für ein Nutzfahrzeug mit
einem ersten Lagerbock (1), der ein erstes Drehgelenk (1a) aufweist;
einem ersten Spiegel (3);
einen Haltearm (5), der in dem ersten Drehgelenk gelagert ist und an dem der erste Spiegel (3) befestigt ist; und
einer Stellvorrichtung (6), die einen Stellmotor (7) umfaßt und so mit dem Haltearm (5) verbunden ist, daß mittels des Stellmotors (7) der Haltearm (5) bezüglich seiner durch das erstes Drehgelenk (1a) definierten Drehachse zur Fahrzeugseite hin- bzw. von dieser weggeschwenkt werden kann.

6. Einklappbarer Außenspiegelaufbau nach Anspruch 5, **dadurch gekennzeichnet, daß** er zusätzlich einen zweiten Lagerbock (2) umfaßt, der ein zweites Drehgelenk (2a) aufweist, in dem der Haltearm 5 gelagert ist.

7. Einklappbarer Außenspiegelaufbau nach wenigstens einem der Ansprüche 5 bis 6, **dadurch gekennzeichnet, daß** der erste Spiegel (3) eine Spiegelscheibe (3a) und eine Verstellvorrichtung (3b) für diese Spiegelscheibe umfaßt.

8. Einklappbarer Außenspiegelaufbau nach wenigstens einem der Ansprüche 5 bis 7, **dadurch gekennzeichnet, daß** der Stellmotor (7) ein elektrischer Drehmotor oder Linearmotor ist.

9. Einklappbarer Außenspiegelaufbau nach wenigstens einem der Ansprüche 5 bis 8, **dadurch gekennzeichnet, daß** die Stellvorrichtung (6) ein Lineargetriebe mit einem Schiebegestänge (8) umfaßt, das gelenkig am Haltearm (5) befestigt ist und durch den Stellmotor (7) so verschoben werden kann, daß der Haltearm zur Fahrzeugseite hin- bzw. von dieser weggeschwenkt wird.

10. Einklappbarer Außenspiegelaufbau nach wenigstens einem der Ansprüche 5 bis 9, **dadurch gekennzeichnet, daß** die Stellvorrichtung (6) ein Drehgetriebe umfaßt, das am oberen oder unteren Drehgelenk (1a, 2a) wirkt und den Haltearm (5) zur Fahrzeugseite hin- bzw. von dieser wegschwenkt.

11. Einklappbarer Außenspiegelaufbau nach wenigstens einem der Ansprüche 5 bis 10, **dadurch gekennzeichnet, daß** die Stellvorrichtung (6) wenigstens teilweise im Außenspiegelaufbau integriert ist, indem wenigstens der Stellmotor (7) wenigstens teilweise im Haltearm (5) oder in einem Lagerbock (1, 2) angeordnet ist.
